# EUROPEAN PATENT APPLICATION

(11) **EP 3 738 917 A1**
(43) Date of publication of application: **18.11.2020**
(21) Application number: 19738766.5
(22) Date of filing: 07.01.2019
(51) Int. Cl.: B66C 1/04

(54) **ELECTRICALLY-CONTROLLED MAGNETIC CONNECTING DEVICE AND ELECTRIC VEHICLE BATTERY-SWAPPING APPARATUS**

(30) Priority: 09.01.2018 CN 201810018323
(71) Applicant: NIO (Anhui) Holding Co., Ltd., Hefei City, Anhui Province (CN)
(72) Inventor: GONG, Hongbing, Hong Kong (CN)
(74) Representative: Vossius & Partner Patentanwälte Rechtsanwälte mbB
(86) International application number: PCT/CN2019/070552
(87) International publication number: WO 2019/137317

(57) **Abstract**

Disclosed is an electrically-controlled magnetic connecting device. The electrically-controlled magnetic connecting device comprises: an electric motor (10); a first magnet (20) disposed on a housing of the electrically-controlled magnetic connecting device; and a second magnet (30) disposed beside the first magnet (20) and capable of rotating with respect to the first magnet (20) by means of the electric motor (10), so that relative positions of magnetic poles of the first magnet (20) and the second magnet (30) change. The electrically-controlled magnetic connecting device comprises an on state and an off state. In the on state, the magnetic poles at the same side of the first magnet (20) and the second magnet (30) are the same to produce an attraction force for a ferromagnetic object; and in the off state, the magnetic poles at the same side of the first magnet (20) and the second magnet (30) are opposite to release the attraction force for the ferromagnetic object. The electrically-controlled magnetic connecting device can be automatically and remotely controlled.

## Description

### Technical Field

The invention relates to an electrically-controlled magnetic connecting device and an electric vehicle battery-swapping apparatus provided with the electrically-controlled magnetic connecting device, which relate to the field of electrical control technology.

### Background Art

With the construction of electric vehicle battery swap stations in China, various electric vehicle battery-swapping apparatuses have also emerged. Although the current electric vehicle battery-swapping apparatuses have a mechanism that uses magnetic control, an operator mainly relies on manual battery swapping without fully automatic and remote control.

Therefore, it is urgent to develop a new electrically-controlled magnetic connecting device for electric vehicle battery-swapping apparatuses.

### Summary of the Invention

In view of this, according to a first aspect of the invention, an electrically-controlled magnetic connecting device is provided, thereby effectively solving the above problems and other problems in the prior art. In the electrically-controlled magnetic connecting device according to the invention, the electrically-controlled magnetic connecting device comprises:
an electric motor;
a first magnet disposed on a housing of the electrically-controlled magnetic connecting device; and
a second magnet disposed beside the first magnet and capable of rotating with respect to the first magnet by means of the electric motor, so that relative positions of magnetic poles of the first magnet and the second magnet change,
wherein the electrically-controlled magnetic connecting device comprises an on state and an off state; in the on state, the magnetic poles at the same side of the first magnet and the second magnet are the same to produce an attraction force for a ferromagnetic object; and in the off state, the magnetic poles at the same side of the first magnet and the second magnet are opposite to release the attraction force for the ferromagnetic object.

In a further favorable implementation of the electrically-controlled magnetic connecting device according to the invention, the electric motor is a stepper motor.

In a yet further favorable implementation of the electrically-controlled magnetic connecting device according to the invention, the electrically-controlled magnetic connecting device comprises a transmission device composed of a worm gear and a worm, wherein the second magnet is mounted on the worm gear, and the worm is driven by the electric motor to rotate.

In a further favorable implementation of the electrically-controlled magnetic connecting device according to the invention, the first magnet and the second magnet are permanent magnets.

In a further favorable implementation of the electrically-controlled magnetic connecting device according to the invention, the second magnet is mounted on the stepper motor.

In a yet further favorable implementation of the electrically-controlled magnetic connecting device according to the invention, the size and the shape of the first magnet and the second magnet are the same.

In a further favorable implementation of the electrically-controlled magnetic connecting device according to the invention, the electrically-controlled magnetic connecting device comprises an intermediate state, in which the magnetic poles at the same side of the first magnet and the second magnet are disposed at an included angle.

In another favorable implementation of the electrically-controlled magnetic connecting device according to the invention, in the on state and the off state, the first magnet and the second magnet are disposed on the same straight line.

In addition, according to a second aspect of the invention, an electric vehicle battery-swapping apparatus is further provided. The electric vehicle battery-swapping apparatus is provided with the above-mentioned electrically-controlled magnetic connecting device.

In another favorable implementation of the electric vehicle battery-swapping apparatus according to the invention, the ferromagnetic object is fixed on a battery to be swapped.

It can be appreciated that the electrically-controlled magnetic connecting device according to the invention is not only simple in structure and easy to operate, but can also be automatically and remotely controlled.

### Brief Description of the Drawings

The technical solutions of the invention will be further described in detail below in conjunction with the drawings and specific implementations, in which:
Fig. 1 is a schematic structural diagram of a first specific implementation of an electrically-controlled magnetic connecting device according to the invention in an on state;
Fig. 2 is a schematic structural diagram of the electrically-controlled magnetic connecting device of Fig. 1 in an off state;
Fig. 3 is a schematic structural diagram of the electrically-controlled magnetic connecting device of Fig. 1 in an intermediate state;
Fig. 4 is a schematic structural diagram of a second specific implementation of an electrically-controlled magnetic connecting device according to the invention in an on state;
Fig. 5 is a schematic structural diagram of the electrically-controlled magnetic connecting device of Fig. 4 in an off state; and
Fig. 6 is a schematic structural diagram of the electrically-controlled magnetic connecting device of Fig. 4 in an intermediate state.

### Detailed Description of Embodiments

The specific implementations of the invention will be described in detail below in conjunction with the drawings. First, it should be noted that orientation terms, such as up, down, left, right, front, rear, inside, outside, top, and bottom, which are mentioned or may be mentioned in the description are defined with respect to the structures shown in the figures, and are relative concepts, and therefore may correspondingly vary depending on different positions and different conditions in use. Therefore, these or other orientation terms should not be construed as restrictive terms as well.

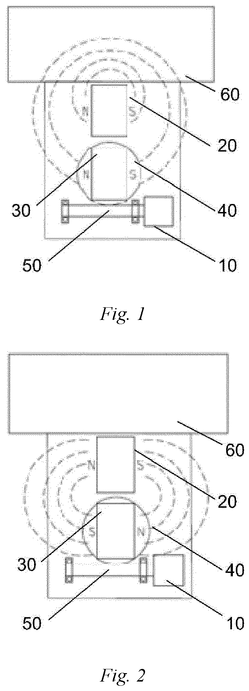

Fig. 1 shows a specific implementation of an electrically-controlled magnetic connecting device according to the invention. It can be seen in Fig. 1, the electrically-controlled magnetic connecting device is composed of components such as an electric motor 10, a first magnet 20, and a second magnet 30. The first magnet 20 is disposed on a housing of the electrically-controlled magnetic connecting device, and the second magnet 30 is disposed beside the first magnet 20 and is driven by the electric motor 10 such that the second magnet can rotate with respect to the first magnet 20, so that relative positions of magnetic poles of the first magnet 20 and the second magnet 30 change. Preferably, the first magnet 20 and the second magnet 30 are permanent magnets.

In the embodiment shown in Fig. 1, the electrically-controlled magnetic connecting device comprises a transmission device composed of a worm gear 40 and a worm 50, wherein the second magnet 30 is mounted on the worm gear 40, and the worm 50 is driven by the electric motor 10 to rotate. When the electrically-controlled magnetic connecting device is in operation, the worm 50 is first driven by the electric motor 10, and the worm gear 40 is then driven by the worm 50 to drive the second magnet 30 to rotate, so that the relative positions of the magnetic poles of the second magnet 30 and the first magnet 20 change.

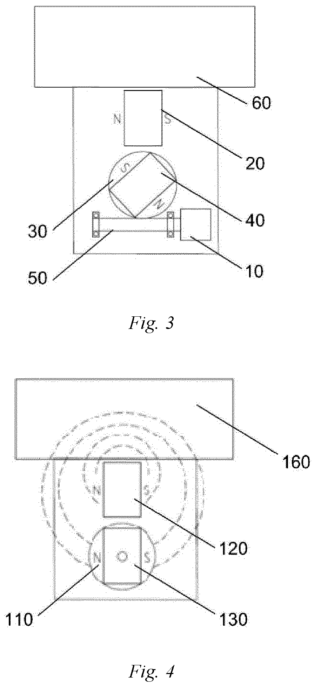

Next, the operation principle of the electrically-controlled magnetic connecting device in the above embodiment will be mainly introduced. The electrically-controlled magnetic connecting device comprises an on state and an off state. In the on state, the magnetic poles at the same side of the first magnet 20 and the second magnet 30 are the same to produce an attraction force for a ferromagnetic object, so that the entire mechanism produces a strong magnetic force for the outside, and in particular an attraction force for a ferromagnetic object 60, as shown in Fig. 1; and in the off state, the magnetic poles at the same side of the first magnet 20 and the second magnet 30 are opposite, so that the entire mechanism is weakly magnetic for the outside, that is, does not produce the attraction force for the ferromagnetic object 60, as shown in Fig. 2. Preferably, in the on state and the off state, the first magnet 20 and the second magnet 30 are disposed on the same straight line. Certainly, it could be understood by a person skilled in the art that the electrically-controlled magnetic connecting device further comprises an intermediate state, in which the magnetic poles at the same side of the first magnet 20 and the second magnet 30 are disposed at a certain included angle, as shown in Fig. 3. In short, the on state and the off state are switched by the electric motor 10 driving the worm 50 and then the worm 50 driving the worm gear 40, so that the second magnet 30 rotates by 180 degrees with respect to the first magnet 20, thereby achieving switching between the on state and the off state.

Fig. 4 shows another specific implementation of an electrically-controlled magnetic connecting device according to the invention. It can be seen in Fig. 4, the electrically-controlled magnetic connecting device is composed of components such as an electric motor 110, a first magnet 120, and a second magnet 130. The first magnet 120 is disposed on a housing of the electrically-controlled magnetic connecting device, and the second magnet 130 is disposed beside the first magnet 120 and is driven by the electric motor 110 such that the second magnet can rotate with respect to the first magnet 120, so that relative positions of magnetic poles of the first magnet 120 and the second magnet 130 change. It should be pointed out that in the embodiment shown in Fig. 4, the electric motor 110 is a stepper motor having a self-locking function. Optionally, the second magnet 130 may be directly mounted on the stepper motor.

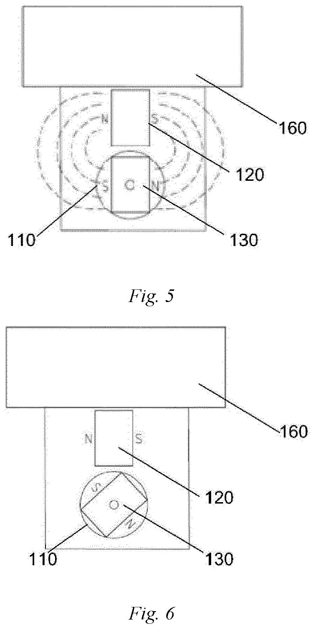

The operation principle of the electrically-controlled magnetic connecting device of the embodiment shown in Fig. 4 will be described in detail below. The electrically-controlled magnetic connecting device comprises an on state and an off state. In the on state, the magnetic poles at the same side of the first magnet 120 and the second magnet 130 are the same to produce an attraction force for a ferromagnetic object 160, so that the entire mechanism produces a strong magnetic force for the outside, and in particular an attraction force for the ferromagnetic object 160, as shown in Fig. 4; and in the off state, the magnetic poles at the same side of the first magnet 120 and the second magnet 130 are opposite, so that the entire mechanism is weakly magnetic for the outside, that is, does not produce the attraction force for the ferromagnetic object 160, as shown in Fig. 5. Preferably, in the on state and the off state, the first magnet 120 and the second magnet 130 are disposed on the same straight line. Certainly, it could be understood by a person skilled in the art that the electrically-controlled magnetic connecting device further comprises an intermediate state, in which the magnetic poles at the same side of the first magnet 120 and the second magnet 130 are disposed at a certain included angle, as shown in Fig. 6. In short, the second magnet 130 fixed on the electric motor 110 rotates by 180 degrees with respect to the first magnet 120 to achieve switching between the on state and the off state.

In addition, the invention further provides an electric vehicle battery-swapping apparatus which comprises the above-mentioned electrically-controlled magnetic connecting device. Further, the ferromagnetic object is fixed on a battery to be swapped.

In summary, the electrically-controlled magnetic connecting device according to the invention is not only simple in structure and easy to operate, but can also be automatically and remotely controlled according to requirements. Therefore, it is highly recommended to apply this electrically-controlled magnetic connecting device to the electric vehicle battery-swapping apparatus.

Several specific implementations have been listed above to explain in detail the electrically-controlled magnetic connecting device and the electric vehicle battery-swapping apparatus provided with the electrically-controlled magnetic connecting device according to the invention. These examples are only for the purpose of illustrating the principle of the invention and the implementations thereof, rather than limiting the invention. Those of ordinary skill in the art can make various variations and improvements without departing from the spirit and scope of the invention. For example, the size and the shape of the first magnet and the second magnet are the same. Therefore, all equivalent technical solutions should fall within the scope of the invention and be defined by the claims of the invention.

## Claims

1. An electrically-controlled magnetic connecting device, **characterized by** comprising:
an electric motor;
a first magnet disposed on a housing of the electrically-controlled magnetic connecting device; and
a second magnet disposed beside the first magnet and capable of rotating with respect to the first magnet by means of the electric motor, so that relative positions of magnetic poles of the first magnet and the second magnet change,
wherein the electrically-controlled magnetic connecting device comprises an on state and an off state; in the on state, the magnetic poles at the same side of the first magnet and the second magnet are the same to produce an attraction force for a ferromagnetic object; and in the off state, the magnetic poles at the same side of the first magnet and the second magnet are opposite to release the attraction force for the ferromagnetic object.

2. The electrically-controlled magnetic connecting device according to claim 1, **characterized in that** the electric motor is a stepper motor.

3. The electrically-controlled magnetic connecting device according to claim 1, **characterized in that** the electrically-controlled magnetic connecting device comprises a transmission device composed of a worm gear and a worm, wherein the second magnet is mounted on the worm gear, and the worm is driven by the electric motor to rotate.

4. The electrically-controlled magnetic connecting device according to claim 1, **characterized in that** the first magnet and the second magnet are permanent magnets.

5. The electrically-controlled magnetic connecting device according to claim 2, **characterized in that** the second magnet is mounted on the stepper motor.

6. The electrically-controlled magnetic connecting device according to claim 1, **characterized in that** the size and the shape of the first magnet and the second magnet are the same.

7. The electrically-controlled magnetic connecting device according to claim 1, **characterized by** comprising an intermediate state, in which the magnetic poles at the same side of the first magnet and the second magnet are disposed at an included angle.

8. The electrically-controlled magnetic connecting device according to claim 1, **characterized in that** in the on state and the off state, the first magnet and the second magnet are disposed on the same straight line.

9. An electric vehicle battery-swapping apparatus, **characterized by** comprising an electrically-controlled magnetic connecting device of any one of preceding claims.

10. The electric vehicle battery-swapping apparatus according to claim 9, **characterized in that** the ferromagnetic object is fixed on a casing of a battery to be swapped.
